# FASCICULE DE BREVET EUROPEEN

(11) **EP 2 431 927 B1**
(45) Date de publication et mention de la délivrance du brevet: **04.07.2018**
(21) Numéro de dépôt: 11181130.3
(22) Date de dépôt: 13.09.2011
(51) Int. Cl.: G06K 19/077

(54) **Carte NFC sensible aux courants de foucault**
Wirbelstromempfindliche NFC Karte
Eddy currents sensitive NFC card

(30) Priorité: 25.02.2011 FR 1151552; 21.09.2010 FR 1003752; 21.09.2010 FR 1003754
(43) Date de publication de la demande: 21.03.2012
(73) Titulaire: Inside Secure, 13590 Meyreuil (FR)
(72) Inventeur: Charrat, Bruno, 13090 AIX EN PROVENCE (FR); Cordier, Nicolas, 13080 LUYNES (FR)
(74) Mandataire: Marchand, André

(56) Documents cités:
- EP-A2- 2 211 295
- DE-A1-102007 061 361
- US-A1- 2009 284 377

## Description

La présente invention concerne les cartes NFC (Near Field Communication), et plus particulièrement les cartes NFC destinées à être insérées dans un dispositif portatif tel qu'un téléphone portable. La présente invention concerne également un procédé permettant d'établir une communication sans contact entre une carte NFC et un dispositif NFC externe.

Les cartes NFC connues destinées à être insérées dans des dispositifs portatifs sont par exemple des cartes SIM-NFC (Subscriber Identity Modules), ou des cartes SD-NFC (Secure Digital). La demande de brevet européen 2 211 295 divulgue une carte NFC comprenant un circuit d'antenne comprenant au moins une bobine d'antenne présentant un axe magnétique, et au moins un circuit intégré relié au circuit d'antenne. La publication internationale WO 98/58509 décrit une carte SIM-NFC comprenant des plages de contact, un microprocesseur, un module NFC, et une bobine d'antenne. La bobine d'antenne présente un ou plusieurs enroulements coaxiaux coplanaires parallèles au plan de la carte, et par conséquent présente un axe magnétique perpendiculaire au plan de la carte. Elle peut effectuer des communications à contact avec le téléphone portable par les plages de contact et une communication NFC avec un dispositif NFC externe par la bobine d'antenne.

Lorsque la carte et le dispositif NFC externe sont placés suffisamment près l'un de l'autre, la bobine d'antenne de la carte est couplée inductivement à une bobine d'antenne du dispositif NFC externe, et des données peuvent être échangées en utilisant des techniques NFC classiques telles que celles définies par les normes ISO 14443, ISO 15693, et Sony Felica®.

Dans la plupart des applications, le dispositif externe émet un champ magnétique alors que la carte NFC est passive et envoie des données par modulation de charge. A cet effet, la bobine d'antenne de la carte est associée à des composants passifs (ex. condensateurs)

Il peut par conséquent être souhaité de prévoir une carte NFC qui offre une distance de communication maximale moins dépendante de l'environnement de la carte, lorsque la carte est insérée dans un dispositif portatif.

Des modes de réalisation de l'invention concernent une carte NFC comprenant un circuit d'antenne comprenant au moins une bobine d'antenne présentant un axe magnétique, et au moins un circuit intégré relié au circuit d'antenne, dans laquelle l'axe magnétique de la bobine d'antenne est sensiblement parallèle au plan de la carte, et l'axe magnétique de la bobine d'antenne présente un angle de 45° ± 25° par rapport à un axe longitudinal de la carte.

Selon un mode de réalisation, la carte comprend en outre au moins un écran électriquement conducteur s'étendant à proximité de la bobine d'antenne, qui ne traverse pas l'axe magnétique, et la carte ne comprend aucun matériau magnétiquement perméable entre l'écran conducteur et la bobine d'antenne.

Selon un mode de réalisation, le circuit d'antenne présente une fréquence d'accord qui a été réglée en présence de l'écran électriquement conducteur, et qui ne se désaccorde pas lorsqu'un élément métallique est placé à proximité de l'écran électriquement conducteur.

Selon un mode de réalisation, l'écran conducteur s'étend sur ou à proximité de la face supérieure ou inférieure de la carte.

Selon un mode de réalisation, la carte comprend un premier écran conducteur s'étendant sur un côté de la bobine d'antenne sans traverser son axe magnétique, et un second écran conducteur s'étendant sur un autre côté de la bobine d'antenne sans traverser son axe magnétique.

Selon un mode de réalisation, la bobine d'antenne est enroulée autour d'un coeur magnétiquement perméable.

Selon un mode de réalisation, la bobine d'antenne est enroulée autour du coeur magnétiquement perméable avec un angle de 45° ± 10° par rapport à un axe longitudinal du coeur magnétiquement perméable.

Selon un mode de réalisation, le circuit intégré est configuré pour mettre en oeuvre un procédé de modulation de charge active comprenant l'étape consistant à émettre des salves de champ magnétique au moyen d'une bobine d'antenne lorsque des données doivent être envoyées, afin de compenser l'effet négatif de l'écran sur la distance de communication maximale offerte par la carte en ce qui concerne l'envoi des données par modulation de charge.

Selon un mode de réalisation, l'écran conducteur comprend au moins une fente afin de réduire l'effet des courants de Foucault circulant dans l'écran conducteur en présence d'un champ magnétique externe.

Selon un mode de réalisation, l'écran conducteur est divisé en au moins deux sous écrans afin de réduire l'effet des courants de Foucault circulant dans l'écran conducteur en présence d'un champ magnétique externe.

Des modes de réalisation concernent également un procédé d'accord d'une bobine d'antenne d'une carte NFC, comprenant les étapes consistant à prévoir une carte NFC selon l'invention, et régler une fréquence d'accord du circuit d'antenne en présence de l'écran électriquement conducteur.

Des modes de réalisation concernent également un procédé permettant d'effectuer une communication sans contact entre une carte NFC et un dispositif NFC externe, comprenant les étapes consistant à prévoir une carte NFC selon l'invention, régler une fréquence d'accord du circuit d'antenne de la carte en présence de l'écran électriquement conducteur, émettre un premier champ magnétique oscillant avec le dispositif externe, placer la carte à proximité des bords d'une carte de circuit imprimé, et détecter, avec la bobine d'antenne de la carte NFC, un contre-champ magnétique généré par des courants de Foucault dans la carte de circuit imprimé, afin d'augmenter la distance de communication maximale entre la carte et le dispositif externe.

Selon un mode de réalisation, le procédé comprend en outre une étape consistant à utiliser l'écran conducteur pour protéger la fréquence d'accord du circuit d'antenne contre l'effet de désaccord de la carte de circuit imprimé, afin d'augmenter la distance de communication maximale entre la carte et le dispositif externe.

Selon un mode de réalisation, le procédé comprend en outre une étape consistant à émettre des salves d'un second champ magnétique oscillant avec la bobine d'antenne de la carte NFC, alors que le dispositif externe émet le premier champ magnétique oscillant, afin de transférer des données depuis la carte vers le dispositif externe.

Des modes de réalisations de la présente invention vont maintenant être décrits à titre non limitatif, en relation avec les figures jointes parmi lesquelles :
- les figures 1A, 1B, 1C sont respectivement des vues de dessus, de dessous et en coupe d'un premier mode de réalisation d'une carte NFC selon l'invention,
- la figure 2 est un schéma électrique d'un circuit intégré de la carte NFC,
- les figures 3A à 3E représentent différents signaux électriques illustrant le fonctionnement de la carte NFC,
- la figure 4 illustre un premier agencement de la carte NFC à l'intérieur d'un dispositif portatif,
- la figure 5 illustre un mode de réalisation d'un écran conducteur de la carte NFC,
- la figure 6 illustre un second agencement de la carte NFC à l'intérieur d'un dispositif portatif,
- les figures 7 et 8 illustrent d'autres modes de réalisation de l'écran conducteur, et
- la figure 9 est une vue de dessus d'un second mode de réalisation d'une carte NFC selon l'invention.

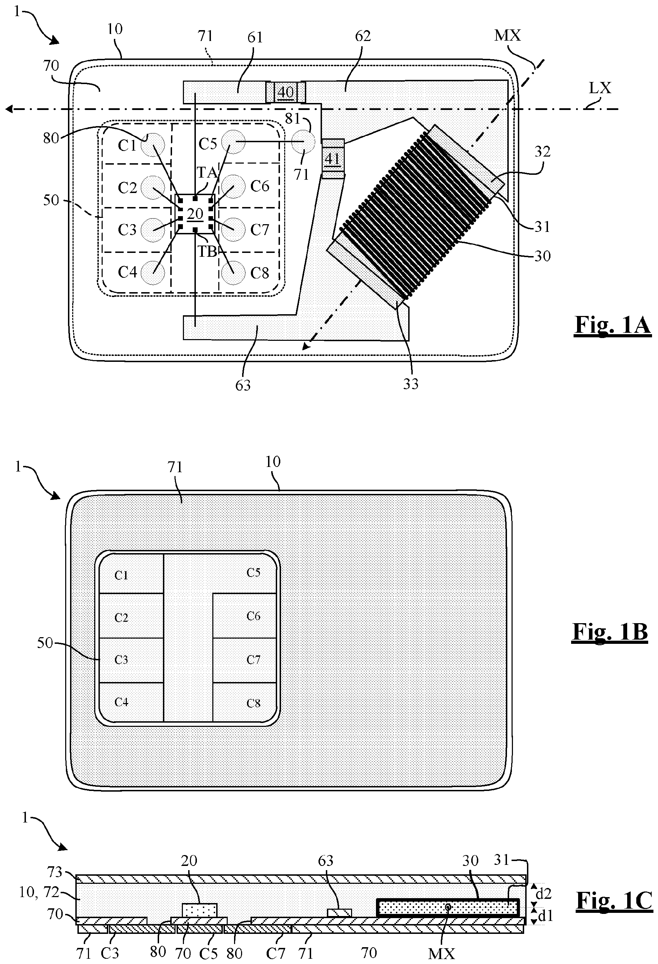

Les figures 1A, 1B, 1C sont respectivement des vues de dessus, de dessous et en coupe d'une carte NFC 1 selon l'invention. La carte NFC peut être une carte SIM-NFC destinée à être insérée dans un téléphone portable. Sur la figure 1A, des éléments internes de la carte sont illustrés à travers un matériau dans lequel ils sont implantés.

La carte NFC 1 comprend un corps en plastique 10, un circuit intégré 20, un circuit d'antenne accordé comprenant une bobine d'antenne 30 et des condensateurs d'accord 40, 41, et un groupe 50 de plages de contact (en pointillés). Le circuit intégré 20 est un dispositif double à contact/sans contact et est conçu pour effectuer des communications à contact ou sans contact. Le circuit intégré 20 peut être un circuit intégré sécurisé pour une carte SIM-NFC.

Le groupe 50 de plages de contact comprend huit contacts ISO 7816 classiques C1 (Vcc), C2 (RST), C3 (CLK), C4 (RFU), C5 (GND), C6 (Vpp), C7 (I/O), et C8 (RFU) auxquels les bornes du circuit intégré 20 sont reliées. Le circuit intégré 20 présente des bornes supplémentaires TA, TB reliées à la bobine d'antenne et aux condensateurs 40, 41.

La bobine d'antenne 30 est de préférence enroulée autour d'un coeur magnétiquement conducteur 31, et le coeur est de préférence en un matériau hautement perméable tel que la ferrite.

La bobine d'antenne 30 présente plusieurs enroulements coaxiaux non coplanaires et un axe magnétique MX sensiblement parallèle au plan de la carte. L'expression "sensiblement parallèle au plan de la carte" signifie que l'axe magnétique MX est au moins parallèle à la face supérieure ou inférieure du corps 10, en supposant que la face supérieure ou inférieure de la carte est plate, et avec une précision qui dépend du processus de fabrication de la carte, par exemple ± 10°.

De plus, la bobine d'antenne 30 est agencée de telle sorte que son axe magnétique MX présente un angle d'approximativement 45° ± 10° par rapport à un axe longitudinal LX de la carte 1. Si la carte présente une forme carrée, l'axe longitudinal LX peut être n'importe quel axe de la carte parallèle à un côté latéral de la carte.

Dans un mode de réalisation, la carte 1 comprend également au moins un écran électriquement conducteur, ici deux écrans. Un premier écran 71 (figures 1A, 1B, 1C) est agencé sous la bobine d'antenne 30 à une distance d1 de son axe magnétique. Un second écran 73 (figure 1C) est agencé sur la bobine d'antenne 30 à une distance d2 de son axe magnétique. Aucun matériau magnétiquement conducteur, en particulier la ferrite, n'est agencé entre la bobine d'antenne et les écrans conducteurs.

Dans le mode de réalisation illustré sur les figures 1A-1C, les premier et second écrans conducteurs 71, 73 sont sensiblement planaires et de préférence orientés de telle sorte qu'ils sont sensiblement parallèles à l'axe magnétique MX de la bobine d'antenne. L'expression "sensiblement parallèles" signifie que les écrans sont parallèles à l'axe magnétique MX avec une précision qui dépend du processus de fabrication de la carte, par exemple ± 10°. Les premier et second écrans conducteurs 71, 73 s'étendent sur les faces inférieure et supérieure de la carte et couvrent presque entièrement les surfaces des faces supérieure et inférieure. Chaque écran présente une épaisseur qui dans certains modes de réalisation peut être au moins égale à l'épaisseur de peau à la fréquence d'accord du circuit d'antenne, par exemple approximativement 18 µm pour une fréquence d'accord de 13,56 MHz. Dans un mode de réalisation, au moins un écran par exemple l'écran 71, est connecté au potentiel de masse du circuit intégré.

En règle générale, concernant l'orientation des écrans conducteurs par rapport à l'axe magnétique MX de la bobine d'antenne, les écrans conducteurs doivent être agencés de telle sorte qu'ils ne traversent pas l'axe magnétique. Cette règle paraît évidente lorsque les écrans sont planaires et orientés de telle sorte qu'ils sont sensiblement parallèles à l'axe magnétique MX.

Le circuit d'antenne comprenant la bobine d'antenne 30 et les condensateurs d'accord 40, 41 est accordé à une fréquence de fonctionnement spécifique par exemple 13,56 MHz tel que requis par les normes ISO 14443, ISO 15693, et Sony Felica®. L'accord s'effectue en présence des écrans électriquement conducteurs 71, 73. Les écrans conducteurs 71, 73 protègeront ensuite le circuit d'antenne accordé de l'influence de désaccord que les parties métalliques peuvent avoir sur la fréquence d'accord une fois que la carte est agencée dans un dispositif portatif tel qu'un téléphone portable.

En d'autres termes, étant donné que l'environnement métallique de la carte n'est généralement pas connu en avance et dépend du dispositif dans lequel la carte est insérée, les écrans conducteurs permettent de créer une perturbation métallique connue fixe à proximité de la bobine d'antenne, et d'accorder le circuit d'antenne en présence de cette perturbation métallique. Par conséquent, les écrans conducteurs 71, 73, s'ils sont prévus, créent une "perturbation volontaire" du circuit d'antenne qui est prise en compte lorsque le circuit d'antenne est accordé, et qui prévaudra sur les perturbations des parties métalliques du dispositif dans lequel ils seront insérés.

Dans le mode de réalisation illustré sur les figures 1A-1C, la carte 1 est faite à partir d'une carte de circuit imprimé (PCB) comprenant un substrat diélectrique 70 électriquement isolant, et des couches électriquement conductrices supérieure et inférieure agencées sur les faces supérieure et inférieure du substrat 70. La couche conductrice inférieure est gravée pour former le groupe 50 de plages de contact C1-C8 et l'écran 71, qui sont isolés l'un de l'autre par des espacements. La couche conductrice supérieure est gravée pour former des pistes conductrices 61, 62, 63.

La borne TA du circuit intégré 20 est reliée par fil à la piste conductrice 61. La borne TB du circuit intégré 20 est reliée par fil à la piste conductrice 63. D'autres bornes du circuit intégré sont reliées par fil aux plages de contact C1-C8 par des ouvertures 80 pratiquées dans le substrat 70. Optionnellement, le premier écran conducteur 71 est relié par fil à la plage de masse C5, à l'aide d'un fil passant par une ouverture supplémentaire 81 dans le substrat 70, puis passant par l'une des ouvertures 80 vers la plage de contact C5.

Le condensateur 40 présente une première borne connectée à la piste conductrice 61 et une seconde borne connectée à la piste conductrice 62. Le condensateur 41 présente une première borne connectée à la piste conductrice 62 et une seconde borne connectée à la piste conductrice 63. La bobine d'antenne 30 présente une première borne 32 connectée à la piste conductrice 62 et une seconde borne 33 connectée à la piste conductrice 63. Le condensateur 41 est par conséquent agencé en parallèle avec la bobine d'antenne 40 et le condensateur 41 est agencé en série entre la première borne 32 de la bobine d'antenne et la borne TA du circuit intégré 20.

Le circuit intégré 20, la bobine d'antenne 30, les condensateurs 40, 41, et les fils de connexion sont encapsulés dans un matériau polymère 72 s'étendant sur le substrat 70, tel qu'une résine ou du polychlorure de vinyle (PVC), qui forme le corps 10 de la carte.

Le second écran conducteur 73 est formé ou déposé sur la face supérieure de la carte. Il peut se constituer d'une plaque métallique ou peut comprendre une ou plusieurs couches d'un matériau conducteur, par exemple une peinture conductrice.

Dans un mode de réalisation, la carte présente une épaisseur totale de 804 µm, le substrat 70 présente une épaisseur de 100 µm, le premier écran conducteur 71 présente une épaisseur de 18 µm, le second écran conducteur 73 une épaisseur de 18 µm, et la bobine d'antenne 30 et son coeur 31 présentent une épaisseur de 500 µm. La distance d1 entre le centre de la bobine d'antenne et le premier écran conducteur 71 est de 368 µm et la distance d2 entre le centre de la bobine d'antenne et le premier écran conducteur 71 est de 400 µm.

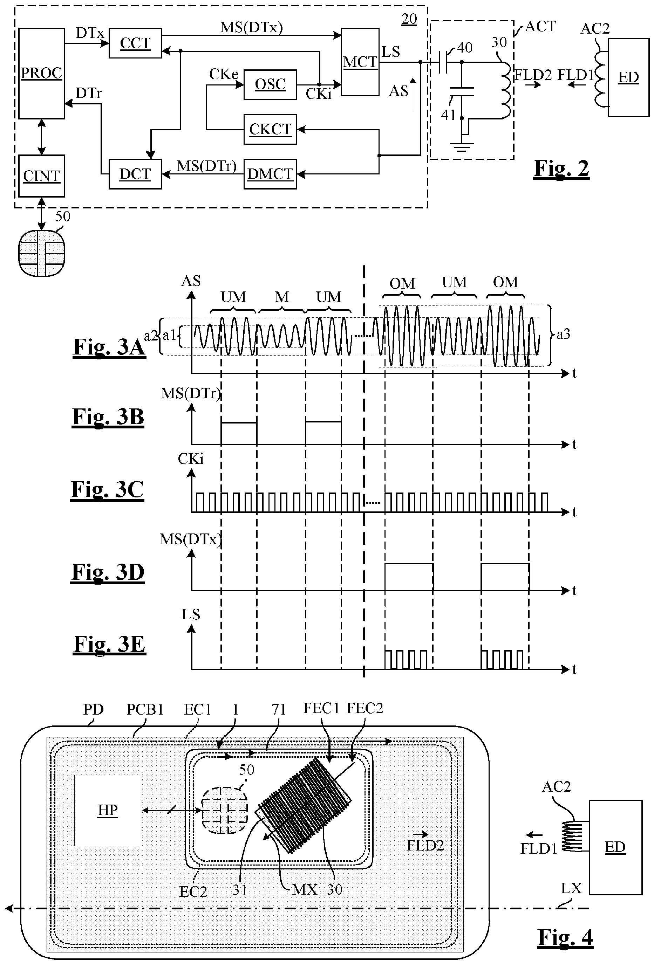

Dans un mode de réalisation préféré, le circuit intégré 20 est configuré pour envoyer des données par couplage inductif au moyen d'un procédé de modulation de charge active. Ce procédé comprend une étape consistant à émettre, en présence d'un dispositif NFC externe émettant en continu un premier champ magnétique alternatif, des salves d'un second champ magnétique alternatif. De telles salves de champ magnétique sont perçues par le dispositif externe comme une modulation de charge passive. Cette technique a été proposé par le demandeur dans le brevet EP 1 327 222 (US 7 098 770B2), Cf. figures 4A à 4E, page 8, tableau 4, paragraphe 074.

En ce qui concerne l'envoi de données par la carte, le procédé de modulation de charge permet d'obtenir une distance de communication maximale satisfaisante malgré la présence des écrans conducteurs 71, 73.

La figure 2 représente sous forme de blocs un exemple d'architecture du circuit intégré 20 mettant en oeuvre un procédé de modulation de charge active. Un dispositif externe ED équipé d'une bobine d'antenne AC2 est également illustré.

Le circuit intégré 20 comprend une interface de communication à contact CINT, un processeur PROC, et des moyens de communication sans contact.

L'interface de communication à contact CINT est reliée au groupe 50 de plages de contact C1-C8 et présente une entrée/sortie connectée au processeur PROC. L'interface CINT assure la gestion de protocole et le codage/décodage de données lors d'une communication à contact entre le processeur PROC et un processeur externe, tel que le processeur de bande de base d'un téléphone portable.

Les moyens de communication sans contact comprennent un circuit de codage CCT, un circuit de décodage DCT, un circuit de modulation MCT, un circuit de démodulation DMCT, un circuit d'horloge CKCT, et un oscillateur synchrone OSC. Ils comprennent également un circuit d'antenne ACT comprenant les condensateurs 40, 41 et la bobine d'antenne 30 précédemment décrite.

Lors d'une communication sans contact avec le dispositif externe ED, le dispositif externe ED émet un champ magnétique FLD1 oscillant à la fréquence de fonctionnement. Le processeur PROC fournit aux moyens de communication sans contact des données DTx à envoyer au dispositif externe ED, et traite des données DTr fournies par les moyens de communication sans contact, reçues du dispositif externe.

Lors d'une telle communication sans contact, un signal d'antenne AS est induit dans le circuit d'antenne ACT par le champ magnétique FLD1. Le circuit d'horloge CKCT reçoit le signal d'antenne AS et en extrait un signal d'horloge externe CKe. Le signal d'horloge externe CKe est, en général, à la même fréquence que la fréquence porteuse.

L'oscillateur synchrone OSC reçoit le signal d'horloge externe CKe et fournit un signal d'horloge interne CKi. L'oscillateur synchrone OSC présente un mode de fonctionnement synchrone dans lequel la phase et la fréquence du signal d'horloge interne CKi sont asservis à ceux du signal d'horloge externe, et un mode de fonctionnement en oscillation libre dans lequel le signal d'horloge externe ne pilote plus l'oscillateur.

Lorsque le dispositif externe ED envoie des données DTr au circuit intégré 20, il module le champ magnétique FLD1 au moyen d'un signal de modulation porteur de données MS(DTr). Puisque le signal d'antenne induit AS est l'image du champ magnétique, le signal de modulation porteur de données est également trouvé dans le signal d'antenne AS.

Le circuit de démodulation DMCT extrait du signal d'antenne AS le signal de modulation MS(DTr), et le fournit au circuit de décodage DCT. Le circuit de décodage DCT décode les données DTr et les fournit au processeur PROC.

Lorsque le circuit intégré 20 envoie des données DTx au dispositif externe ED, les données à envoyer DTx sont d'abord fournies au circuit de codage CCT et l'oscillateur synchrone OSC est placé en mode de fonctionnement en oscillation libre. Le circuit de codage CCT fournit un signal de modulation porteur de données MS(DTx) au circuit de modulation MCT.

Le circuit de modulation MCT combine le signal de modulation porteur de données MS(DTx) et le signal d'horloge interne CKi et fournit un signal de modulation de charge active LS au circuit d'antenne. Le signal de modulation de charge active LS comprend des salves du signal d'horloge interne CKi séparées par des périodes non modulées lors desquelles le signal LS présente une valeur par défaut. Par exemple, le circuit de modulation MCT fournit le signal d'horloge interne CKi comme signal de modulation LS lorsque MS(DTx)=1, et place sa sortie à 0 lorsque MS(DTx)=0. Ainsi, le signal LS est à 0 lorsque le signal MS(DTx) est à 0, et copie le signal Cki lorsque le signal MS(DTx) est à 1. Le circuit d'antenne ACT reçoit ainsi des salves du signal d'horloge interne CKi et la bobine d'antenne 30 émet des salves correspondantes d'un champ magnétique FLD2. Ces salves de champ magnétique sont détectées par le dispositif externe ED comme une modulation de charge passive. Le dispositif externe extrait de sa bobine d'antenne AC2 le signal de modulation porteur de données MS(DTx), puis décode les données DTx envoyées par le circuit intégré 20.

Les figures 3A à 3E illustrent schématiquement une séquence de transmission de données lors de laquelle des données DTr sont reçues par le circuit intégré 20 (partie gauche des figures) et une séquence de transmission de données lors de laquelle des données DTx sont envoyées par le circuit intégré 20 (partie droite des figures). La figure 3A illustre le signal d'antenne AS. La figure 3B illustre le signal de modulation MS(DTr). La figure 3C illustre le signal d'horloge interne CKi. La figure 3D illustre le signal de modulation MS(DTx), et la figure 3E illustre le signal de modulation de charge active LS.

Lorsque le dispositif externe ED envoie des données DTr, il module l'amplitude du champ magnétique FLD1 avec une profondeur de modulation qui dépend du protocole de communication choisi. Tel que représenté dans la partie gauche de la figure 3A, le signal d'antenne AS illustre des périodes modulées M lors desquelles son amplitude présente une valeur minimum a1, et des périodes non modulées UM lors desquelles son amplitude présente une valeur maximum a2.

Tel qu'illustré sur la partie droite de la figure 3A, lorsque le circuit intégré 20 envoie des données DTx, le signal d'antenne présente des périodes non modulées UM de la même amplitude a2 que lors de la réception de données, et des périodes de surtension OM lors desquelles son amplitude présente une valeur survoltée a3. Lors des périodes de surtension, l'amplitude du signal d'antenne est survoltée par l'injection du signal d'horloge interne CKi dans le circuit d'antenne ACT, et le signal CKi est superposé sur le signal induit dans le circuit d'antenne ACT par le champ magnétique externe FLD1. L'injection du signal d'horloge interne CKi provoque des salves du signal magnétique FLD2 à émettre par la carte.

Lorsque la carte est en cours d'utilisation après avoir été placée dans le connecteur de carte d'un dispositif portatif, elle est généralement à proximité de la carte de circuit imprimé (PCB) du dispositif, à une distance verticale ou "distance Z" de celle-ci, par rapport au plan XY de la carte de circuit imprimé. Une telle distance est généralement imprévisible pour le fabricant de carte en ce qui concerne la fabrication des cartes "génériques" (c'est-à-dire les cartes destinées à tout type de téléphone portable). Cette distance Z dépend de la structure du dispositif et de l'emplacement du connecteur de carte. Le connecteur de carte peut être monté directement sur la carte PCB ou agencé plusieurs millimètres au-dessus. L'emplacement XY de la carte par rapport à la carte PCB est également imprévisible, ainsi que l'orientation de l'axe magnétique de la bobine d'antenne par rapport aux bords de la carte PCB.

Lors d'une communication sans contact, la distance de communication maximale entre la carte et le dispositif externe est affectée par divers facteurs et phénomènes physiques dont :
1) l'influence de matériaux métalliques situés sous la carte sur la fréquence d'accord du circuit d'antenne. Ces matériaux métalliques peuvent comprendre des parties métalliques de la carte PCB et d'éventuels composants métalliques ;
2) l'influence des matériaux métalliques situés sur la carte sur la fréquence d'accord du circuit d'antenne. Ces matériaux métalliques peuvent inclure les parties métalliques d'une batterie agencée sur la carte ;
3) l'apparition de courants de Foucault dans la carte PCB. De tels courants de Foucault tendent à neutraliser le champ magnétique FLD1 émis par le dispositif externe ED en générant un contre-champ magnétique local induit en raison de la loi de Lenz. Ils circulent en général à la périphérie de la carte PCB et le contre-champ magnétique apparaît à proximité des bords de la carte PCB ;
4) l'apparition de courants de Foucault dans les premier et second écrans conducteurs 71, 73, qui génèrent également des contre champs magnétiques locaux à proximité de chaque écran.

Les effets de ces différents phénomènes sur le fonctionnement de la carte 1 vont maintenant être décrits de manière simplifiée, à la lumière des exemples d'agencement de la carte 1 dans un dispositif portatif.

La figure 4 représente schématiquement la carte NFC 1 montée ou insérée dans un dispositif portatif HD selon un premier agencement. Le dispositif portatif HD peut être un téléphone portable, un assistant numérique personnel (PDA), etc. Le dispositif portatif comprend une carte de circuit imprimé PCB1 comprenant des parties métalliques telles que des pistes conductrices sur lesquelles des composants électroniques sont montés (non illustrés). Il est supposé par exemple qu'un processeur hôte HP est monté sur la carte PCB1, tel que le processeur de bande de base d'un téléphone portable. Le processeur hôte HP présente des entrées/sorties reliées au groupe 50 de plages de contact de la carte. La figure 4 représente également le dispositif externe ED émettant le champ magnétique FLD1.

Dans cet exemple, la carte 1 est agencée de telle sorte que sa face inférieure, comprenant le premier bouclier conducteur 71, s'étend au-dessus de la carte PCB1, et de telle sorte que l'un de ses côtés longitudinaux se trouve à proximité d'un bord de la carte PCB1 et parallèle à celui-ci. Par conséquent, l'axe longitudinal LX de la carte est également parallèle au côté de la carte et l'axe magnétique MX de la bobine d'antenne présente un angle d'approximativement 45° par rapport au côté de la carte. Par souci de simplicité, la figure 4 ne représente que la bobine d'antenne 30, le coeur d'antenne 31, le groupe 50 de plages de contact, et l'écran conducteur 71 ; les autres éléments de la carte ne sont pas illustrés.

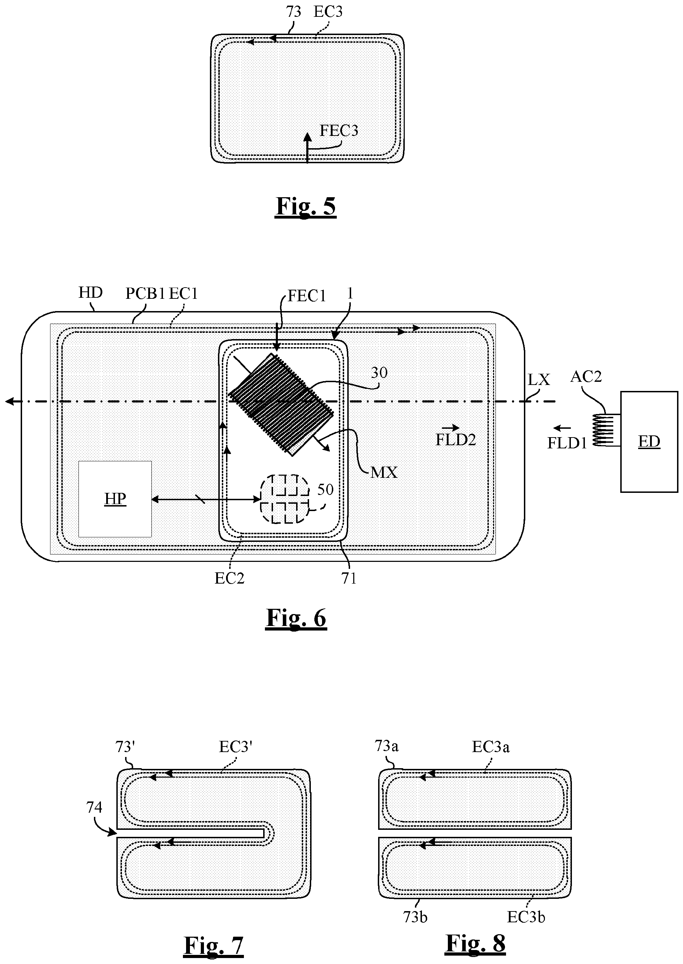

En présence du champ magnétique FLD1, des courants de Foucault EC1 sont induits et circulent sur la périphérie de la carte de circuit imprimé PCB1, en supposant que celui-ci présente un grand plan de masse. Les courants de Foucault EC1 génèrent un contre-champ magnétique FEC1 qui tend à neutraliser le champ magnétique FLD1. Les courants de Foucault EC2 dans l'écran conducteur 71 de la carte génèrent également un contre-champ magnétique FEC2 qui présente la même polarité que le contre-champ magnétique FEC1 vu depuis la bobine d'antenne 30. Tel qu'illustré sur la figure 5 par une vue de dessous de l'écran conducteur 73 (c'est-à-dire l'écran conducteur 73 vu depuis la bobine d'antenne), les courants de Foucault EC3 dans l'écran conducteur 73 génèrent également un contre-champ magnétique FEC3 qui présente une polarité opposée à celle des contre champs magnétiques FEC1 et FEC2, vu depuis la bobine d'antenne 30. Il est supposé ici que si les écrans présentent sensiblement les mêmes dimensions et la même conductivité électrique, les contre-champs magnétiques FEC2 et FEC3 s'annulent l'un l'autre dans la région entre les écrans 71, 73 où la bobine d'antenne 30 est agencée.

Il peut être observé que lorsque la carte est agencée tel qu'illustré, c'est-à-dire de telle sorte que la bobine d'antenne soit à proximité de l'un des bords de la carte PCB, son axe magnétique formant un angle de 45° avec le bord, et lorsque la distance Z est faible, la grandeur du contre-champ magnétique FEC1 prévaut sur celle du champ magnétique FLD1 externe et améliore la réception des données DTr envoyées par le dispositif externe ED. Par conséquent, le contre-champ magnétique FEC1 est détecté par la bobine d'antenne 30 au lieu du champ magnétique FLD1 original, permettant à la carte 1 de recevoir des données du dispositif externe ED avec une meilleure distance de communication maximale. Si le coeur d'antenne 31 est fait d'un matériau hautement perméable tel que la ferrite, le coeur concentre les lignes de champ magnétique et la distance de communication maximale en est d'autant plus augmentée.

Il sera compris que la réception des données DTr envoyées par le dispositif externe ED serait améliorée davantage si l'axe magnétique de la bobine d'antenne formait un angle de 90° avec le bord de la PCB. Cependant, agencer la bobine d'antenne 30 de telle sorte que son axe magnétique MX forme approximativement un angle de 45° par rapport à l'axe longitudinal LX de la carte est un bon compromis en tenant compte du fait que la carte pourrait également être agencée perpendiculairement au bord, tel qu'illustré sur la figure 6.

La figure 6 est similaire à la figure 4 à l'exception de l'agencement de la carte, qui est tel que l'axe longitudinal LX de la carte 1 est perpendiculaire à un bord de la carte de circuit imprimé PCB1. La bobine d'antenne 30 est à proximité du bord de la PCB et son axe magnétique présente un angle de 45° par rapport au bord, grâce à l'agencement à 45° de l'axe magnétique MX par rapport à l'axe longitudinal LX de la carte. Ainsi, lorsque la distance Z est faible, la grandeur du contre-champ magnétique FEC1 prévaut également sur celle du champ magnétique externe FLD1 et améliore la réception des données DTr envoyées par le dispositif externe ED.

Il sera compris que si l'axe magnétique de la bobine d'antenne était parallèle au bord de la PCB, le contre-champ magnétique FEC1 local ne passerait pas par la bobine d'antenne 30, et n'augmenterait pas la distance de communication maximale entre la carte et le dispositif externe ED.

Les premier et second écrans conducteurs agissent également comme des boucliers pour que la performance de la carte NFC dépende moins de l'environnement métallique située sous elle et sur elle. En particulier, puisque la fréquence d'accord du circuit d'antenne est réglée en présence de l'écran conducteur supérieur 73, l'effet de désaccord provoqué par la présence d'une batterie au-dessus de la carte est significativement atténué.

Divers test ont été effectués pour évaluer l'effet des écrans conducteurs optionnels sur les performances de la carte lors d'une communication sans contact.

Une carte NFC ne comprenant pas d'écran électriquement conducteur a tout d'abord été étudiée. La carte a été directement placée sur une carte de circuit imprimé, puis accordée à 13,56 MHz. Un champ magnétique 13,56 MHz a été émis et la tension du signal d'antenne a été mesurée. Puis, la carte a été placée à 2 mm au-dessus de la carte de circuit imprimé sans avoir réaccordé la bobine d'antenne. La fréquence d'accord a été diminuée, et la tension du signal d'antenne était d'environ 33% inférieure à celle du premier cas.

Ces mesures ont été répétées avec la carte NFC 1 comprenant le premier écran conducteur 71 uniquement (le second écran étant destiné aux cartes devant être agencées sous une batterie ou des parties métalliques). La carte 1 a été directement placée sur la carte de circuit imprimé, puis accordée à 13,56 MHz. La tension du circuit d'antenne était identique à celle obtenue sans l'écran conducteur 71. Lorsque la carte 1 a été placée 2 mm au-dessus de la carte de circuit imprimé PCB, la fréquence d'accord n'a pas changé, ni la tension du signal d'antenne.

La figure 7 illustre une première variante 73' du second écran conducteur. L'écran 73' présente une fente longitudinale 74 qui modifie la circulation des courants de Foucault EC3. Les courants de Foucault suivent les bords de l'écran puis les bords de la fente, et par conséquent suivent un chemin en forme de U au lieu d'une boucle autour de la périphérie de l'écran.

La figure 8 illustre une seconde variante du second écran conducteur. L'écran est divisé en deux parties formant deux sous écrans 73a, 73b. Chaque sous écran 73a, 73b est traversé par des courants de Foucault EC3a, EC3b qui circulent en boucles de la moitié de la taille de la boucle suivie par le courant de Foucault EC3 de la figure 6.

Ces variantes du second écran 73 permettent au contre-champ magnétique FEC3 généré par l'écran d'être réduit. Par conséquent, le contre-champ magnétique FEC2 généré par le premier écran 71 n'est pas annulé par le contre-champ magnétique FEC3 et il est ajouté au contre-champ magnétique FEC1 généré par la carte de circuit imprimé PCB1.

Dans d'autres modes de réalisation, l'écran 73 peut présenter plusieurs fentes perpendiculaires à ses bords ou peut être divisé en un grand nombre de sous écrans, de manière à réduire encore la surface des zones entourées par des courants de Foucault.

Il peut être noté que, contrairement à la distance maximale de communication pour la réception de données, lorsque la carte envoie des données en émettant des salves de champ magnétique FLD2, la distance de communication maximale pour l'envoi de données n'est pas très sensible à l'emplacement XYZ de la bobine d'antenne par rapport à la carte de circuit imprimé. Ainsi, la distance de communication maximale est environ la même sur la figure 4 et la figure 6 en ce qui concerne l'envoi de données au dispositif externe ED.

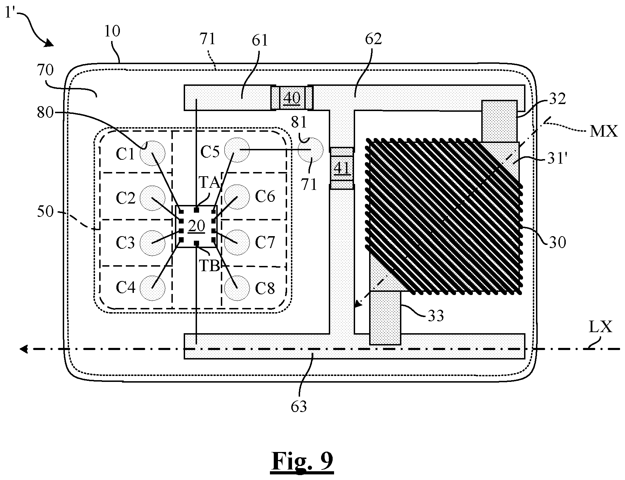

La figure 9 est une vue de dessus d'une variante 1' de la carte NFC illustrée sur la figure 1. Cette variante diffère de celle de la figure 1 uniquement en ce que le coeur magnétiquement conducteur 31' de la bobine présente un axe longitudinal qui est à approximativement 90° par rapport à l'axe longitudinal LX de la carte 1, alors que l'axe magnétique MX de la bobine est toujours à approximativement 90° par rapport à l'axe longitudinal LX de la carte 1. En ce sens, la bobine est enroulée autour du coeur 31 avec un angle de 45° ± 10° par rapport à un axe longitudinal du coeur magnétiquement conducteur 31'.

Il apparaîtra clairement à l'homme de l'art qu'une carte NFC selon la présente invention est susceptible de nombreux autres modes de réalisation. En particulier, la bobine d'antenne peut comprendre deux bobines en série, chacune présentant un axe magnétique agencé à 45° ± 10° par rapport à l'axe longitudinal LX de la carte. Dans un autre mode de réalisation, la bobine d'antenne peut comprendre quatre bobines en série, deux bobines présentant un axe magnétique agencé à 45° ± 10° par rapport à l'axe longitudinal LX et à 90° l'une de l'autre, et deux autres bobines présentant un axe magnétique agencé à 0° et 90° ± 10° par rapport à l'axe longitudinal LX.

De plus, l'invention n'est pas limitée à un mode de réalisation dans lequel l'axe magnétique MX de la bobine d'antenne présente un angle de 45° ± 10° par rapport à l'axe longitudinal LX de la carte. Dans d'autres modes de réalisation, l'axe magnétique MX de la bobine d'antenne peut présenter un angle de 45° ± 25° par rapport à l'axe longitudinal de la carte, c'est-à-dire un angle compris entre 20° et 70°. De manière générale, les angles minimum et maximum entre l'axe magnétique MX et l'axe longitudinal LX peuvent être définis par des expériences, de telle sorte que la grandeur du contre-champ magnétique FEC1 améliore la réception des données envoyées par le dispositif externe ED dans les deux agencements de la carte illustrés sur la figure 4 et la figure 6.

Divers procédés connus dans le domaine de la fabrication de cartes à puce peuvent être utilisés pour fabriquer divers modes de réalisation d'une carte selon l'invention. Dans certains modes de réalisation, le ou les écrans conducteurs peuvent être enchâssés dans le corps de la carte et peuvent s'étendre à proximité de la face inférieure ou de la face supérieure de la carte. La face supérieure et/ou la face inférieure de la carte peuvent ne pas être planaires. Le ou les écrans peuvent être incurvés au lieu d'être planaires. Le ou les écrans peuvent s'étendre sur seulement une partie de la surface de la carte. Le groupe de plages de contact peut comprendre deux plages de contact seulement pour alimenter la carte lorsqu'elle émet le champ magnétique. La carte peut également être alimentée par une batterie et peut ne pas avoir de plages de contact du tout. La carte peut également être purement passive et configurée pour envoyer des données par modulation de charge passive, et extraire une tension d'alimentation du champ magnétique FLD1 externe.

De plus, dans la présente description et les revendications, le terme "NFC" se réfère à tout type de communication sans contact effectuée par couplage inductif, quel que soit le protocole utilisé et la fréquence de fonctionnement. En outre, le terme "carte NFC" se réfère à tout type de support portatif présentant des capacités NFC.

## Revendications

1. Carte NFC (1) comprenant :
- un circuit d'antenne (ACT) comprenant au moins une bobine d'antenne (30) présentant un axe magnétique (MX), et
- au moins un circuit intégré (20) relié au circuit d'antenne,
**caractérisé en ce que** :
- l'axe magnétique (MX) de la bobine d'antenne est sensiblement parallèle au plan de la carte, et
- l'axe magnétique (MX) de la bobine d'antenne présente un angle de 45° ± 25° par rapport à un axe longitudinal (LX) de la carte (1).

2. Carte NFC selon la revendication 1, dans laquelle
- la carte comprend en outre au moins un écran électriquement conducteur (71, 73, 73', 73a, 73b) s'étendant à proximité de la bobine d'antenne, qui ne traverse pas l'axe magnétique, et
- la carte ne comprend aucun matériau magnétiquement perméable entre l'écran conducteur et la bobine d'antenne.

3. Carte NFC selon la revendication 2, dans laquelle le circuit d'antenne présente une fréquence d'accord qui a été réglée en présence de l'écran électriquement conducteur, et qui ne se désaccorde pas lorsqu'un élément métallique est placé à proximité de l'écran électriquement conducteur.

4. Carte NFC selon l'une des revendications 2 ou 3, dans laquelle l'écran conducteur (71, 73, 73', 73a, 73b) s'étend sur ou à proximité de la face supérieure ou inférieure de la carte.

5. Carte NFC selon l'une des revendications 2 à 4, comprenant un premier écran conducteur (71) s'étendant sur un côté de la bobine d'antenne sans traverser son axe magnétique, et un second écran conducteur (73, 73', 73a, 73b) s'étendant sur un autre côté de la bobine d'antenne sans traverser son axe magnétique.

6. Carte NFC selon l'une des revendications 1 à 5, dans laquelle la bobine d'antenne est enroulée autour d'un coeur magnétiquement perméable (31, 31').

7. Carte NFC selon la revendication 6, dans laquelle la bobine d'antenne est enroulée autour du coeur magnétiquement perméable (31') avec un angle de 45° ± 10° par rapport à un axe longitudinal du coeur magnétiquement perméable.

8. Carte NFC selon l'une des revendications 1 à 7, dans laquelle le circuit intégré (20) est configuré pour mettre en oeuvre un procédé de modulation de charge active comprenant l'étape consistant à émettre des salves de champ magnétique (FLD2) au moyen d'une bobine d'antenne lorsque des données doivent être envoyées, afin de compenser l'effet négatif de l'écran (71, 73, 73', 73a, 73b) sur la distance de communication maximale offerte par la carte en ce qui concerne l'envoi des données par modulation de charge.

9. Carte NFC selon l'une des revendications 1 à 8, dans laquelle l'écran conducteur (73') comprend au moins une fente (74) afin de réduire l'effet des courants de Foucault (EC3) circulant dans l'écran conducteur en présence d'un champ magnétique externe (FLD1).

10. Carte NFC selon l'une des revendications 1 à 8, dans laquelle l'écran conducteur est divisé en au moins deux sous écrans (73a, 73b) afin de réduire l'effet des courants de Foucault (EC3a, EC3b) circulant dans l'écran conducteur en présence d'un champ magnétique externe.

11. Procédé d'accord d'une bobine d'antenne d'une carte NFC, comprenant les étapes consistant à :
- prévoir une carte (1) selon l'une des revendications 1 à 10, et
- régler une fréquence d'accord du circuit d'antenne (ACT) en présence de l'écran électriquement conducteur (71, 73, 73', 73a, 73b).

12. Procédé permettant d'effectuer une communication sans contact entre une carte NFC (1) et un dispositif NFC externe (ED), comprenant les étapes consistant à :
- prévoir une carte NFC (1) selon l'une des revendications 1 à 10,
- régler une fréquence d'accord du circuit d'antenne de la carte en présence de l'écran électriquement conducteur,
- émettre un premier champ magnétique oscillant avec le dispositif externe (ED),
- placer la carte à proximité des bords d'une carte de circuit imprimé (PCB1), et
détecter, avec la bobine d'antenne de la carte NFC, un contre-champ magnétique (FEC1) généré par des courants de Foucault dans la carte de circuit imprimé (PCB1), afin d'augmenter la distance de communication maximale entre la carte et le dispositif externe (ED).

13. Procédé selon la revendication 12, comprenant en outre une étape consistant à utiliser l'écran conducteur (71) pour protéger la fréquence d'accord du circuit d'antenne contre l'effet de désaccord de la carte de circuit imprimé, afin d'augmenter la distance de communication maximale entre la carte et le dispositif externe (ED).

14. Procédé selon l'une des revendications 12 et 13, comprenant en outre une étape consistant à émettre des salves d'un second champ magnétique oscillant (FLD2) avec la bobine d'antenne de la carte NFC, alors que le dispositif externe (ED) émet le premier champ magnétique oscillant (FLD1), afin de transférer des données (DTx) depuis la carte vers le dispositif externe.

## Patentansprüche

1. NFC-Karte (1), umfassend:
- Einen Antennenschaltkreis (ACT), mindestens eine Antennenspule (30) umfassend, die eine magnetische Achse (MX) aufweist, und
- mindestens einen integrierten Schaltkreis (20), der mit dem Antennenschaltkreis verbunden ist,
**dadurch gekennzeichnet, dass**:
- die magnetische Achse (MX) der Antennenspule in etwa parallel zur Kartenebene liegt, und
- die magnetische Achse (MX) der Antennenspule einen Winkel von 45° ± 25° im Verhältnis zu einer Längsachse (LX) der Karte (1) aufweist.

2. NFC-Karte nach Anspruch 1, wobei
- die Karte weiter mindestens einen elektrisch leitenden Schirm (71, 73, 73', 73a, 73b) umfasst, der sich in der Nähe der Antennenspule erstreckt, der nicht durch die magnetische Achse verläuft, und
- die Karte kein magnetisch durchlässiges Material zwischen dem leitenden Schirm und der Antennenspule umfasst.

3. NFC-Karte nach Anspruch 2, wobei der Antennenschaltkreis eine Abstimmfrequenz aufweist, die in Gegenwart des elektrisch leitenden Schirms eingestellt wurde und die sich nicht verstimmt, wenn ein metallisches Element in der Nähe des elektrisch leitenden Schirms platziert wird.

4. NFC-Karte nach einem der Ansprüche 2 oder 3, wobei sich der leitende Schirm (71, 73, 73', 73a, 73b) über oder in der Nähe der Oberseite oder Unterseite der Karte erstreckt.

5. NFC-Karte nach einem der Ansprüche 2 bis 4, einen ersten leitenden Schirm (71) umfassend, der sich auf einer Seite der Antennenspule erstreckt, ohne durch ihre magnetische Achse zu verlaufen, und einen zweiten leitenden Schirm (73, 73', 73a, 73b), der sich auf einer anderen Seite der Antennenspule erstreckt, ohne durch ihre magnetische Achse zu verlaufen.

6. NFC-Karte nach einem der Ansprüche 1 bis 5, wobei die Antennenspule um einen magnetisch durchlässigen Kern (31, 31') gewickelt ist.

7. NFC-Karte nach Anspruch 6, wobei die Antennenspule mit einem Winkel von 45° ± 10° im Verhältnis zu einer Längsachse des magnetisch durchlässigen Kerns um den magnetisch durchlässigen Kern (31') gewickelt ist.

8. NFC-Karte nach einem der Ansprüche 1 bis 7, wobei der integrierte Schaltkreis (20) konfiguriert ist, um ein Verfahren zur aktiven Lastmodulation umzusetzen, den Schritt umfassend, der darin besteht, Magnetfeldsalven (FLD2) anhand einer Antennenspule auszusenden, wenn Daten zu versenden sind, um den negativen Effekt des Schirms (71, 73, 73', 73a, 73b) über die maximale Kommunikationsdistanz auszugleichen, die von der Karte hinsichtlich der Versendung von Daten durch Lastmodulation angeboten wird.

9. NFC-Karte nach einem der Ansprüche 1 bis 8, wobei der leitende Schirm (73') mindestens einen Spalt (74) umfasst, um den Effekt von Foucault-Strömen (EC3) zu verringern, die in Gegenwart eines externen Magnetfelds (FLD1) in dem leitenden Schirm zirkulieren.

10. NFC-Karte nach einem der Ansprüche 1 bis 8, wobei der leitende Schirm in mindestens zwei Unterschirme (73a, 73b) unterteilt ist, um den Effekt von Foucault-Strömen (EC3a, EC3b) zu verringern, die in Gegenwart eines externen Magnetfelds (FLD1) in dem leitenden Schirm zirkulieren.

11. Verfahren zum Abstimmen einer Antennenspule einer NFC-Karte, umfassend die Schritte, die darin bestehen:
- eine Karte (1) nach einem der Ansprüche 1 bis 10 vorzusehen, und
- eine Abstimmfrequenz des Antennenschaltkreises (ACT) in Gegenwart des elektrisch leitenden Schirms (71, 73, 73', 73a, 73b) einzustellen.

12. Verfahren, das es ermöglicht, eine kontaktlose Kommunikation zwischen der NFC-Karte (1) und einer externen NFC-Vorrichtung (ED) durchzuführen, die Schritte umfassend, die darin bestehen:
- eine NFC-Karte (1) nach einem der Ansprüche 1 bis 10 vorzusehen,
- eine Abstimmfrequenz des Antennenschaltkreises der Karte in Gegenwart des elektrisch leitenden Schirms einzustellen,
- ein erstes schwingendes Magnetfeld mit der externen Vorrichtung (ED) auszusenden,
- die Karte in der Nähe der Ränder einer Leiterplattenkarte (PCB1) zu platzieren, und mit der Antennenspule der NFC-Karte ein Gegenmagnetgegenfeld (FEC1) zu detektieren, das durch Foucault-Ströme auf der Leiterplattenkarte (PCB1) erzeugt wird, um die maximale Kommunikationsdistanz zwischen der Karte und der externen Vorrichtung (ED) zu erhöhen.

13. Verfahren nach Anspruch 12, weiter einen Schritt umfassend, der darin besteht, den leitenden Schirm (71) zu verwenden, um die Abstimmfrequenz des Antennenschaltkreises gegen den Effekt der Verstimmung der Leiterplattenkarte zu schützen, um die maximale Kommunikationsdistanz zwischen der Karte und der externen Vorrichtung (ED) zu erhöhen.

14. Verfahren nach einem der Ansprüche 12 und 13, weiter einen Schritt umfassend, der darin besteht, Salven eines zweiten schwingenden Magnetfelds (FLD2) mit der Antennenspule der NFC-Karte auszusenden, während die externe Vorrichtung (ED) das erste schwingende Magnetfeld (FLD1) aussendet, um Daten (DTx) von der Karte zur externen Vorrichtung zu übertragen.

## Claims

1. NFC card (1) comprising:
- an antenna circuit (ACT) comprising at least one antenna coil (30) having one magnetic axis (MX), and
- at least one integrated circuit (20) linked to the antenna circuit,
**characterized in that**:
- the magnetic axis (MX) of the antenna coil is substantially parallel to the plane of the card, and
- the magnetic axis (MX) of the antenna coil is at an angle of 45° ± 25° with respect to a longitudinal axis (LX) of the card (1).

2. NFC card according to claim 1, in which:
- the card further comprises at least one electrically conductive screen (71, 73, 73', 73a, 73b) extending near the antenna coil, which does not cross the magnetic axis, and
- the card does not comprise any magnetically permeable material between the said at least one conductive screen and the antenna coil.

3. NFC card according to claim 2, wherein the antenna circuit has a tuning frequency which has been set in the presence of the said at least one electrically conductive screen, and does not detune when a metallic element is placed near the electrically conductive screen.

4. NFC card according to one of claim 2 or 3, wherein the conductive screen (71, 73, 73', 73a, 73b) extends on or near the upper or the lower face of the card.

5. NFC card according to one of claims 2 to 4, comprising a first conductive screen (71) extending on one side of the antenna coil without crossing its magnetic axis, and a second conductive screen (73, 73', 73a, 73b) extending on another side of the antenna coil without crossing its magnetic axis.

6. NFC card according to one of claims 1 to 5, wherein the antenna coil is wound around a magnetically permeable core (31, 31').

7. NFC card according to claim 6, wherein the antenna coil is wound around the magnetically permeable core (31') with a 45° ± 10° angle with respect to a longitudinal axis of the magnetically conductive core.

8. NFC card according to one of claims 1 to 7, in which the integrated circuit (20) is configured to implement an active load modulation method comprising emitting bursts of magnetic field (FLD2) by means of the antenna coil when data are to be sent, in order to compensate the negative effect of the screen (71, 73, 73', 73a, 73b) on the maximum communication distance offered by the card as far as the sending of data by load modulation is concerned.

9. NFC card according to one of claims 1 to 8, wherein the conductive screen (73') comprises at least one slot (74) to reduce the effect of eddy currents (EC3) circulating in the conductive screen in the presence of an external magnetic field (FLD1).

10. NFC card according to one of claims 1 to 8, wherein the conductive screen is split into at least two sub-screens (73a, 73b) to reduce the effect of eddy currents (EC3a, EC3b) circulating in the conductive screen in the presence of an external magnetic field.

11. A method for tuning an antenna coil of an NFC card, comprising the steps of:
- providing a card (1) according to one of claims 1 to 10, and
- setting a tuning frequency of the antenna circuit (ACT) in the presence of said at least one electrically conductive screen (71, 73, 73', 73a, 73b).

12. A method for performing a contactless communication between an NFC card (1) and an NFC external device (ED), comprising the steps of:
- providing an NFC card (1) according to one of claims 1 to 10,
- setting a tuning frequency of the antenna circuit of the card in the presence of said at least one electrically conductive screen,
- emitting a first oscillating magnetic field with the external device (ED),
- placing the card near the edges of a printed circuit board (PCB1), and
sensing, with the antenna coil of the NFC card, a counter magnetic field (FEC1) generated by eddy currents in the printed circuit board (PCB1), to increase the maximum communication distance between the card and the external device (ED).

13. A method according to claim 12, further comprising using the conductive screen (71) to protect the tuning frequency of the antenna circuit against the detuning effect of the printed circuit board, to increase the maximum communication distance between the card and the external device (ED).

14. A method according to one of claims 12 and 13, further comprising emitting bursts of a second oscillating magnetic field (FLD2) with the antenna coil of the NFC card, while the external device (ED) emits the first oscillating magnetic field (FLD1), to transfer data (DTx) from the card to the external device.
